**Europäisches Patentamt**

**European Patent Office**

**Office européen des brevets**

(19)

(11) Veröffentlichungsnummer: **0 110 244**
**B1**

(12) **EUROPÄISCHE PATENTSCHRIFT**

(45) Veröffentlichungstag der Patentschrift:
18.05.88

(51) Int. Cl.⁴: **B 29 B 7/74,** B 29 B 7/80,
**B 01 F 3/04,** B 01 F 13/02

(21) Anmeldenummer: **83111478.0**

(22) Anmeldetag: **17.11.83**

(54) **Verfahren und Vorrichtung zum Herstellen eines fliessfähigen, zu Schaumstoff ausreagierenden Gemisches aus fliessfähigen Komponenten.**

(30) Priorität: 27.11.82  DE 3244037

(43) Veröffentlichungstag der Anmeldung:
13.06.84 Patentblatt 84/24

(45) Bekanntmachung des Hinweises auf die Patenterteilung:
18.05.88 Patentblatt 88/20

(84) Benannte Vertragsstaaten:
DE FR GB IT

(56) Entgegenhaltungen:
EP-A-0 025 844
AT-B-353 472
DE-A-2 724 132

(73) Patentinhaber: BAYER AG, Konzernverwaltung RP
Patentabteilung, D-5090 Leverkusen 1 Bayerwerk
(DE)

(72) Erfinder: Krippl, Kurt, Niederstrasse 104, D-4019
Monheim (DE)
Erfinder: Schulte, Klaus, Dipl.- Ing., Kurt-
Schumacher- Ring 91b, D-5090 Leverkusen 1 (DE)

### Beschreibung

Die Erfindung richtet sich auf ein Verfahren und eine Vorrichtung zum Herstellen eines fließfähigen, zu Schaumstoff ausreagierenden Gemisches aus fließfähigen Komponenten, wobei mindestens eine der Komponenten vor dem dosierten Eintrag in die Mischzone in Abhängigkeit von Dichtewerten geregelt mit Gas beladen wird.

Bei der Herstellung von Schaumstoff, insbesondere auf Basis von Polyurethan, ist für die Verschäumung der Gashaushalt der Komponenten bzw. des Reaktionsgemisches ein wichtiger Parameter. In den Komponenten gelöst enthaltene Gase bilden bei der plötzlichen Entspannung in der Mischkammer winzige Bläschen, die als Keime für die Schäumreaktion dienen. Eine gleichbleibende, reproduzierbare Gasbeladung - den jeweiligen Erfordernissen angepaßt - ist deshalb wichtig.

Hierzu hat man schon die verschiedensten Anstrengungen gemacht, um die Begasung - meist wird Luft eingebracht - kontinuierlich oder diskontinuierlich durchzuführen. An sich wäre die kontinuierliche Gasbeladung vorteilhaft; da aber häufig in Formwerkzeugen verschäumt werden muß, wird nach jedem Formfüllvorgang eine Unterbrechung des Mischvorganges erforderlich. Wegen des dauernden Umschaltens läßt sich keine mit genügender Genauigkeit reproduzierbare Gasbeladung durchführen. Im übrigen ist hierzu auch ein Regelkreis erforderlich, der bei den hohen Durchsatzmengen pro Zeiteinheit zu träge arbeitet. Weiterhin wird in den meisten Fällen die gewünschte Gasmenge nicht ausreichend fein dispergiert, so daß Gasanteile wieder aus der Dispersion entweichen können. Da gleichzeitig noch Lösungsvorgänge im Zweistoff-Gemisch ablaufen, ist eine konstante Gasbeladung sehr schwierig und somit auch eine exakte Dosierung nicht gewährleistet.

So wurde schon vorgeschlagen (EP-A1-0 025 844), beim Herstellen eines Massiv- oder Schaumstoff bildenden Reaktionsgemisches zum Erzielen eines guten Endproduktes den Massestrom und die Gasbeladung im Sinne der Einhaltung vorgegebener Sollwerte zu regeln, wozu bei mindestens einer Komponente die Dichte mittels eines radiometrischen Meßgerätes unter Hochdruck und unter Niederdruck ermittelt und der Volumenstrom mittels eines Zählers gemessen werden, und aus der Messung unter Hochdruck der Massestrom der Komponente in einem Rechner als Produkt der Dichte und des gemessenen Volumenstromes ermittelt wird und nach Vergleich mit einem vorgegebenen Sollwert erforderlichenfalls nachgeregelt wird, wobei der Dichtewert unter Niederdruck als Maß für die Gasbeladung dient und durch Vergleich der Differenz der beiden gemessenen Dichtewerte die benötigte Gasmenge im Sinne der Einhaltung eines vorgegebenen Sollwertes geregelt wird. Diese Methode ist sehr aufwendig und träge, so daß beispielsweise beim Füllen von Formwerkzeugen mit relativ kurzen Füllzeiten wegen dieser Trägheit erhebliche Fehler im Grad der Gasbeladung auftreten können.

Bei der diskontinuierlichen Gasbeladung, beispielsweise durch Einrühren, Injizieren oder Eintragen durch Sinterplatten, sind laufend zu wiederholende Messungen in einem Testbehälter erforderlich (DE-A-2 543 302). Aufgrund der Messung wird die Gaszufuhr nachgeregelt. Diese Verfahrensweise ist noch träger.

Es gilt, die Aufgabe zu lösen, mindestens eine der Komponenten für die Schaumstoff-Herstellung innerhalb enger Toleranzen mit Gas derart zu beladen, daß eine feine, ausreichend beständige Dispersion entsteht, die problemlos dosiert werden kann.

Dies wird dadurch erreicht, daß diese Komponente zusammen mit dem Gas in einem gemeinsamen Raum gelagert wird; mittels eines Rührers in die Komponente eingerührt und dabei darin fein verteilt wird; der Raum während des Einrührens des Gases unter Überdruck gehalten wird; das Gas mittels eines mit konstanter Drehzahl angetriebenen Hohlrührers angesaugt, durch dessen Hohlwelle zu den in den Rührelementen vorgesehenen Austrittsöffnungen geführt und von dort in die Komponente eingeleitet wird, wobei zum Erreichen des gewünschten Grades der Gasbeladung ein definierter Überdruck angelegt wird und bei Erreichen einer vorgegebenen Dichteänderung der Rührerantrieb abgeschaltet wird.

Durch diese Maßnahme gelingt es, innerhalb kurzer Zeit eine hohe Gasbeladung zu erzielen.

Im Prinzip könnte man auch die Rührerdrehzahl ändern. Dies würde jedoch erhebliche Unsicherheitsfaktoren mit sich bringen. Gerade die konstante Rührerdrehzahl und die unveränderbare Rührergeometrie gewährleisten den Erfolg. Durch die Wahl der Höhe des Überdruckes läßt sich die einzuführende Gasmenge steuern. Da der Hohlrührer bei jedem Druck das gleiche Gasvolumen pro Zeiteinheit angesaugt, wird also bei höherem Druck - auf Gas bei Normalzustand (Atmosphärenzustand) bezogen - ein entsprechend höheres Gasvolumen in die Komponente eingebracht. Die Höhe des anwendbaren Druckes ist lediglich abhängig von der Empfindlichkeit der Dichtemessung, da dementsprechend die schnellste Gasbeladung bei möglichst geringem Dichteunterschied zwischen unbegaster und begaster Komponente stattfindet. Hohe Genauigkeiten ergeben radiometrische oder photometrische Dichtemessungen, welche einen engen Toleranzbereich zwischen einem Maximum und einem Minimum zulassen.

Es hat sich gezeigt, daß das Gas - in der Regel wird Luft eingebracht - in der Komponente durch den Hohlrührer fein dispergiert wird. Dadurch wird sichergestellt, daß kaum eine Entmischung zwischen Komponente und Gas stattfindet, was durch hohen Druck noch begünstigt wird.

Zur Durchführung des neuen Verfahrens ist eine Vorrichtung geeignet, bestehend aus Behältern für die Komponenten, von denen Zuführungsleitungen über Dosierpumpen zu einem Mischkopf führen, in dessen mit einem Auslaß versehene Mischkammer sie über Eintrittsöffnungen einmünden, und aus einer Gasbeladungsvorrichtung, wobei ein Dichtemeßgerät vorgesehen ist, welches über eine Regelvorrichtung zur Regelung der Gasbeladung mit der Gasbeladungsvorrichtung verbunden ist.

Das Neue ist darin zu sehen, daß die Gasbeladungsvorrichtung in mindestens einem der Behälter angeordnet ist, wobei dieser Behälter ein Rührwerk sowie Zulauf und Ablauf für die Komponente und einen Druckgaseinlaß aufweist, als Druckbehälter mit Druckregelvorrichtung am Druckgaseinlaß und absperrbarem Komponentenzulauf und -ablauf ausgebildet ist, und daß das Dichtemeßgerät am unteren Abschnitt des Behälters angeordnet und die Regelvorrichtung als Steuergerät ausgebildet ist, welches mit dem Rührwerkantrieb verbunden ist, wobei der Rührer eine Hohlwelle und hohe Rührelemente aufweist und im oberen Bereich der Hohlwelle unterhalb des Deckels des Behälters eine Ansaugöffnung vorgesehen ist und die Rührelemente Gasaustrittsöffnungen aufweisen.

Dabei handelt es sich um die üblichen Vorrichtungen mit oder ohne Kreislaufführung der Komponenten für die Schaumstoff-Herstellung, wobei mindestens einer der Behälter für die Komponenten in der angegebenen Weise besonders ausgestattet ist.

Mittels der Druckregelvorrichtung läßt sich der gewünschte Innendruck im Behälter einstellen. Für die Praxis sind Überdrücke bis etwa 20 bar, aber auch darüber hinaus, geeignet. Als Druckgasquelle dient beispielsweise ein vorhandenes Druckluftnetz oder ein Kompressor. Es ist auch möglich, das beim Füllvorgang der Komponente in den Begasungsbehälter entweichende Gas in ein Reservoir zu leiten, wobei dieses Reservoir dann später wieder als Druckquelle dient.

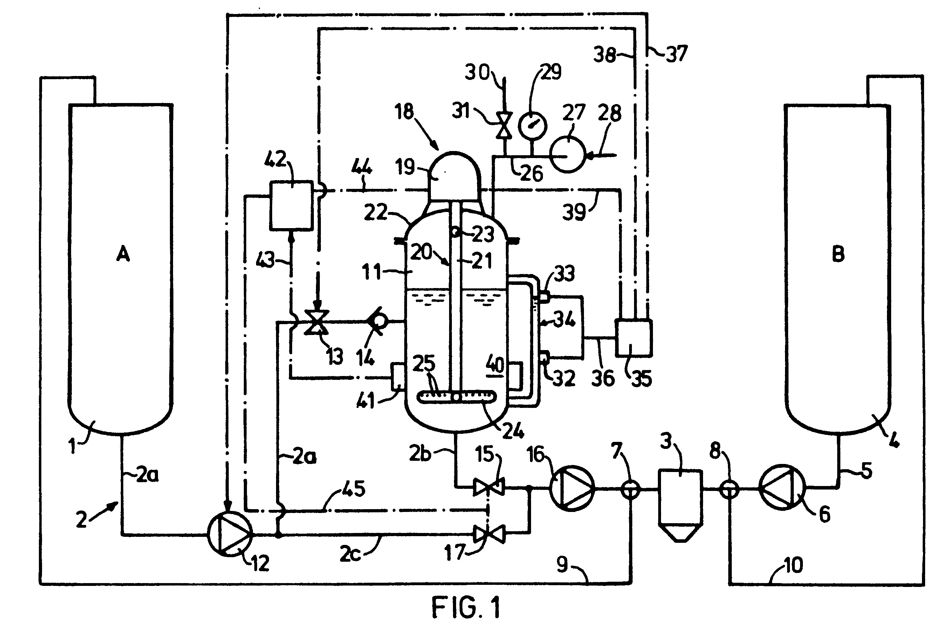

Als Dichtemeßgerät eignet sich insbesondere ein radiometrisch arbeitendes Gerät, wie es beispielsweise aus der Schrift "81-1-1077" der Firma berthold, Laboratorium Prof. Dr. Berthold, D-7547 Wildbad 1, über "Radiometrische Dichtemeßanlage LB 370", z. B. Abb. 4, ersichtlich ist. Auch photometrische Dichtemeßgeräte eignen sich.

Das Steuergerät spricht auf vorgegebene Maximal- oder Minimalmeßwerte der gemessenen Dichte an und schaltet dementsprechend den Rührwerksantrieb ein oder aus.

**Beispiel**

Bei einer Ausgangsdichte der Polyolkomponente von 1,10 g/cm³ wird eine 40-%-ige volumenbezogene Gasbeladung gewünscht. Dies ergibt unter Atmosphärendruck eine Dichte des Gemisches aus Polyol und Gas von 0,785 g/cm³. Am Dichtemeßgerät wird z. B. eine Dichte von 1,00 g/cm³ eingestellt, d. h. 1000 cm³ Polyol sind unter Normalbedingungen mit 9 Vol.-% Gas beladen. Bei 40 Vol.-% Gasbeladung entspricht dies einem einzustellenden Druck von 4,4 bar. Zur Steuerung des Hohlrührers wird noch ein oberer Grenzwert für die Dichte von z. B. 1,005 g/cm³ eingegeben, damit die Gasbeladung auch bei einem Dichteanstieg, z. B. durch Lösungsvorgänge des Gases im Polyol, gewährleistet ist.

Vorzugsweise ist der Komponentenablauf mit einer Sperre versehen, welche ebenfalls an das Steuergerät angeschlossen ist, so daß sich der Absperrhahn im Ablauf nur öffnen läßt, wenn die Dichte der Komponente im Toleranzbereich liegt.

Nach einer Variante ist der Behälter ein Zwischenbehälter, der zwischen dem eigentlichen Vorratsbehälter und der Dosierpumpe vorgesehen ist. Hierdurch ist es möglich, kleinere Chargen der Komponente zu begasen.

Bei dieser Ausführungsform der Vorrichtung mit Zwischenbehälter ist dieser vorzugsweise mittels einer By-pass-Leitung umgehbar. Dadurch ist es möglich, während größerer Pausenzeiten die Komponente aus dem Vorratsbehälter ohne Begasung im Kreislauf zu führen, um Homogenität in der Viskosität sowie in der Temperatur aufrecht zu erhalten.

Bei großem Verbrauch an Komponenten bietet es sich gemäß einer weiteren Ausführungsform der Vorrichtung an, zwei Behälter mit Zusatzaggregaten in Tandem-Anordnung vorzusehen.

Die begaste Komponente kann dann aus einem Behälter entnommen werden, während im anderen gerade die Begasung durchgeführt wird. Daß entsprechende Umschaltorgane vorhanden sein müssen, ist selbstverständlich.

In der Zeichnung ist die neue Vorrichtung in einem Ausführungsbeispiel mit einem Zwischenbehälter für die Begasung rein schematisch dargestellt und nachstehend näher erläutert:

Von einem Vorratsbehälter 1, in welchem die Komponente A (Polyol) gelagert ist, führt eine aus den Zuleitungsabschnitten 2a, 2b, 2c bestehende Zuleitung 2 zu einem Mischkopf 3.

In einem zweiten Vorratsbehälter 4 befindet sich die Komponente B (Isocyanat). Von ihm führt die Zuleitung 5 über eine Dosierpumpe 6 zum Mischkopf 3. In den Zuleitungen 2, 5 sind vor dem Mischkopf 3 Umschaltventile 7, 8 angebracht, von denen Rücklaufleitungen 9, 10 in die Vorratsbehälter 1, 4 zurückführen.

Im Zuleitungsabschnitt 2a, welcher vom Vorratsbehälter 1 zu einem Zwischenbehälter 11 führt, sind eine Förderpumpe 12, ein Absperrventil 13 sowie ein Rückschlagventil 14 angeordnet. Der Zuleitungsabschnitt 2b führt vom Zwischenbehälter 11 über ein Absperrventil 15 und über eine Dosierpumpe 16 sowie über das Umschaltventil 7 zum Mischkopf 3. Der Zuleitungsabschnitt 2c, welcher ein Absperrventil 17 enthält, verbindet unter Umgehung des Zwischenbehälters 11 die Zuleitungsabschnitte 2a, 2b.

Der Zwischenbehälter 11 ist als Druckbehälter ausgebildet. Er ist mit einem Rührwerk 18 ausgestattet, welches aus dem Antrieb 19 und dem Rührer 20 besteht. Der Rührer 20 setzt sich zusammen aus einer Hohlwelle 21, welche kurz unterhalb des Behälterdeckels 22 eine Ansaugöffnung 23 aufweist. Es versteht sich, daß die im Behälterdeckel 22 befindliche, nicht dargestellte Durchführung der Hohlwelle 21 abgedichtet ist. Am unteren Ende der Hohlwelle 21 sind als Arme ausgebildete Rührelemente 24 vorgesehen, welche ebenfalls hohl gestaltet sind und Gasaustrittsöffnungen 25 aufweisen. Durch den Behälterdeckel 22 mündet eine Gaszuführleitung 26 ein. Sie ist über ein Druckreduzierventil 27 mit einer angedeuteten Druckgasquelle (Druckluftnetz) 28 verbunden. Schließlich ist der Gaszuführleitung 26 noch ein Manometer 29 sowie ein Entlüftungsstutzen 30 mit Absperrhahn 31 zugeordnet. Am Zwischenbehälter 11 ist ein mit induktiv arbeitenden Grenzwertgebern 32, 33 versehenes, auf ein gewünschtes Maximum und Minimum einstellbares Füllstandsanzeigegerät 34 angebracht, welches mit Impulsleitungen 36, 37, 38, 39 über ein Steuergerät 35 mit der Förderpumpe 12 bzw. mit den Absperrventilen 13, 15, 17 bzw. mit dem Rührerantrieb 18 verbunden ist. Ein am unteren Teil des Zwischenbehälters 11 unterhalb des vorgesehenen Minimalniveaus der im Zwischenbehälter 11 befindlichen Charge 40 angeordnetes, radiometrisch arbeitendes Dichtemeßgerät 41 ist über ein Steuergerät 42 durch Impulsleitungen 43, 44 mit dem Rührwerksantrieb 19 sowie über eine Impulsleitung 45 mit dem Absperrventil 17 verbunden.

Die Funktionsweise dieser Vorrichtung ist folgende: Bei laufendem Rührwerk 18 und geöffnetem Absperrventil 13 und geschlossenen Absperrventilen 15, 17 fördert die Förderpumpe 12 Polyol aus dem Vorratsbehälter 1 über den Zuleitungsabschnitt 2a in den Zwischenbehälter 11, in welchem bereits Druckluft enthalten ist. Der gewünschte Überdruck wird bei der Beschickung und Entleerung des Behälters 1 konstant gehalten. Man wählt einen möglichst hohen Überdruck, weil dadurch in minimaler Zeit eine optimal große Luftmenge beim Einrühren in die Komponente eingebracht wird. Da jedoch bei hohem Druck der Dichteunterschied zwischen unbeladener und gasbeladener Komponente gering ist und damit der anlegbare Überdruck von der Empfindlichkeit des Dichtemeßgerätes 41 abhängig ist, ist das Niveau des Überdruckes allerdings begrenzt.

Hat das Polyol im Zwischenbehälter 11 den vorgegebenen oberen Füllstand erreicht, gibt der Grenzwertgeber 33 an das Steuergerät 35 einen Impuls, wodurch der Antrieb der Förderpumpe 12 abgeschaltet und das Absperrventil 13 geschlossen wird. Aus dem über der Charge 40 befindlichen Luftpolster wird währenddessen infolge des sich im Rührer 20 aufbauenden Unterdruckes Luft über die Ansaugöffnung 23 angesaugt und aus den Öffnungen 25 der Rührelemente 24 ausgestoßen und in der Charge 40 fein dispergiert. Dabei erniedrigt sich zwangsläufig die Dichte des Polyols entsprechend der momentanen Gasbeladung. Ist der vorgegebene Dichtewert erreicht, schaltet das Steuergerät 42 den Rührwerksantrieb 19 wieder aus und die Charge 40 ist gebrauchsfertig. Sollte bei längerer Lagerung wieder Luft aus der Charge 40 entweichen, wird der Antrieb 19 des Rührwerkes 18 bei Erreichen eines eingestellten unteren Schwellwertes wieder selbsttätig eingeschaltet.

Soll Reaktionsgemisch hergestellt werden, wird mittels des nicht näher dargestellten, allgemeinen Steuergerätes der Vorrichtung das Absperrventil 15 geöffnet und die Dosierpumpen 6, 16 betätigt. Das Absperrventil 15 kann allerdings erst öffnen, wenn das Steuergerät 42 aufgrund der richtigen Gasbeladung der Charge 40 die Sperre aufhebt. Die bisher zum Ausgleichen der Anlaufunregelmäßigkeiten auf Rücklauf geschalteten Umschaltventile 7, 8 werden nach einem kurzen Zeitintervall, etwa nach 5 Sekunden, umgeschaltet, so daß die Komponenten in den Mischkopf 3 strömen. Bei einer an den Mischvorgang anschließenden kurzen Pause werden unter Beibehaltung der bisherigen Stellungen der Absperrventile 13, 15, 17 die Umschaltventile 7, 8 wieder auf Rücklauf geschaltet. Bei längeren Pausen hingegen wird das Absperrventil 15 geschlossen und das Absperrventil 17 geöffnet. Das Polyol gelangt dann aus dem Vorratsbehälter 1 über den als Bypass dienenden Zuleitungsabschnitt 2c unbegast in die Rücklaufleitung 9. Auch die Isocyanat-Komponente wird über die Rücklaufleitung 10 im Kreislauf geführt. Erreicht der Füllstand im Zwischenbehälter 11 den vorgegebenen Minimalstand, wird ein neuer Füllvorgang eingeleitet.

Wird gemäß einer weiteren Ausführungsform der Vorrichtung für die Begasung nicht der Zwischenbehälter 11, sondern der Vorratsbehälter 1 verwendet, so ist die im Ausführungsbeispiel beschriebene Vorrichtung lediglich dahingehend abgewandelt, daß ein Zwischenbehälter 11 von solcher Größe vorgesehen ist, daß er gleichzeitig als Vorratsbehälter dienen kann. In diesem Falle ist von der Zuführungsleitung 2 lediglich der Abschnitt 2b vorhanden und die Rücklaufleitung 9 mündet in diesen Behälter 11. Bei Erreichen des vorgegebenen Minimalfüllstandes wäre der Behälter 11 durch einen nicht dargestellten, absperrbaren Zulauf nachzufüllen. Bei dieser Ausführungsform entfallen mit den Leitungsabschnitten 2a, 2c auch die darin angeordneten Elemente 12, 13, 14, 17.

**Patentansprüche**

1. Verfahren zum Herstellen eines fließfähigen, zu Schaumstoff ausreagierenden Gemisches aus fließfähigen Komponenten, wobei mindestens eine der Komponenten vor dem dosierten Eintrag in die Mischzone in Abhängigkeit von Dichtewerten geregelt mit Gas beladen wird, dadurch gekennzeichnet, daß diese Komponente zusammen mit dem Gas in einem gemeinsamen Raum gelagert wird; das Gas mittels eines Rührers in die Komponente eingerührt und dabei darin fein verteilt wird; der Raum während des Einrührens des Gases unter Überdruck gehalten wird; das Gas mittels eines mit konstanter Drehzahl angetriebenen Hohlrührers angesaugt, durch dessen Hohlwelle zu den in den Rührelementen vorgesehenen Austrittsöffnungen geführt und von dort in die Komponente eingeleitet wird, wobei zum Erreichen des gewünschten Grades der Gasbeladung ein definierter Überdruck angelegt wird und bei Erreichen einer vorgegebenen Dichteänderung der Rührerantrieb abgeschaltet wird.

2. Vorrichtung zur Durchführung des Verfahrens nach Anspruch 1, bestehend aus Behältern (1, 4, 11) für die Komponenten, von denen Zuführungsleitungen (2, 5) über Dosierpumpen (6, 16) zu einem Mischkopf (3) führen, in dessen mit einem Auslaß versehene Mischkammer sie über Eintrittsöffnungen einmünden, und aus einer Gasbeladungsvorrichtung (20), wobei ein Dichtemeßgerät (41) vorgesehen ist, welches über eine Regelvorrichtung (27) zur Regelung der Gasbeladung mit der Gasbeladungsvorrichtung (20) verbunden ist, dadurch gekennzeichnet, daß die Gasbeladungsvorrichtung (20) in mindestens einem der Behälter (11) angeordnet ist, wobei dieser Behälter (11) ein Rührwerk (18) sowie Zulauf (2a) und Ablauf (2b) für die Komponente und einen Druckgaseinlaß (26) aufweist, als Druckbehälter mit Druckregelvorrichtung (27) am Druckgaseinlaß (26) und absperrbarem Komponentenzulauf (2a) und -ablauf (2b) ausgebildet ist, und daß das Dichtemeßgerät (41) am unteren Abschnitt des Behälters (11) angeordnet und die Regelvorrichtung (27) als Steuergerät (42) ausgebildet ist, welches mit dem Rührwerkantrieb (19) verbunden ist, wobei der Rührer (20) eine Hohlwelle (21) und hohle Rührelemente (24) aufweist, und im oberen Bereich der Hohlwelle (21) unterhalb des Deckels (22) des Behälters (11) eine Ansaugöffnung (23) vorgesehen ist und die Rührelemente (24) Gasaustrittsöffnungen (25) aufweisen.

3. Vorrichtung nach Anspruch 2, wobei der Behälter (11) ein Zwischenbehälter ist, der zwischen dem eigentlichen Vorratsbehälter (1) und der Dosierpumpe (16) vorgesehen ist.

4. Vorrichtung nach Anspruch 3, wobei der Zwischenbehälter (11) mittels einer By-pass-Leitung (2c) umgehbar ist.

5. Vorrichtung nach einem der Ansprüche 2 bis 4, wobei zwei Behälter (11) nebst Zusatzaggregaten in Tandem-Anordnung vorgesehen sind.

**Claims**

1. Process for the manufacture of a free-flowing mixture of free-flowing components reacting out into foamed material, wherein at least one of the components is loaded with gas controlled in dependence on density value before the dosed introduction into the mixing zone, characterised in that this component is stored together with the gas in a common space; the gas is stirred into the component by means of a stirrer and therein finely distributed through it; the space is kept at raised pressure while the gas is stirred in; the gas is sucked in by means of a hollow stirrer driven at constant speed of rotation, whose hollow shaft leads to the outlet orifices provided in the stirrer element and is thence introduced into the component, in which process a defined raised pressure is applied to achieve the desired degree of gas loading and upon achievement of a predetermined density change the stirrer drive is switch off.

2. Device for carrying out the process according to claim 1, consisting of containers (1, 4, 11) for the components, from which supply pipes (2, 5) lead across dosing pumps (6, 16) to a mixer casing (3), into whose mixer chamber provided with an outlet they join across inlet orifices, and of a gas loading device (20), wherein a density measuring instrument (41) is provided, which is connected with the gas loading device (20) across a regulating device (27) for regulating the gas loading, characterised in that the gas loading device (20) is arranged in at least one of the containers (11), wherein this container (11) comprises a stirrer (18) as well as an inlet (2a) and an outlet (2b) for the components and a compressed gas inlet (26), is developed as a pressure container with a pressure regulating device (27) at the pressurized gas inlet (26), and component inlet (2a) and outlet (26) capable of being locked off, and that the density measuring instrument (41) is arranged at the lower section of the container and the regulating device (27) is developed as a control apparatus (42), which is connected with the stirrer drive (19), wherein the stirrer (20) comprises a hollow shaft (21) and hollow stirrer elements (24), and a suction orifice (23) is provided in the upper region of the hollow shaft (21) underneath the lid (22) of the container (11) and the stirrer elements (24) comprise gas outlet orifices (25).

3. Device according to claim 2, wherein the container (11) is an intermediate container, which is provided between the actual supply container (1) and the dosing pump (16).

4. Device according to claim 3, wherein the intermediate container (11) may be circumvented by means of a bypass main (2c).

5. Device according to one of claims 2 to 4, wherein two containers (11) are provided besides supplementary aggregates in a tandem arrangement.

**Revendications**

1. Procédé de production d'un mélange fluide, réagissant en formant une mousse, de composants aptes à l'écoulement, dans lequel au moins l'un des composants est chargé de gaz avant son entrée dosée dans la zone de mélange, en proportion réglée en fonction de valeurs de densité, caractérisé en ce que ce composant est stocké conjointement avec le gaz dans un espace commun; le gaz est incorporé dans le composant par agitation au moyen d'un agitateur et il s'y trouve finement réparti; l'espace pendant l'incorporation du gaz par agitation est maintenu en surpression; le gaz est aspiré au moyen d'un agitateur creux entraîné à vitesse de rotation constante, arrive par l'arbre creux de l'agitateur aux ouvertures de sortie prévues dans les éléments agitateurs et par lesquelles il est introduit dans le composant, et on applique alors une surpression définie pour atteindre le degré désiré de charge de gaz et on arrête l'entraînement de l'agitateur lorsqu'une variation prédéterminée de densité a été atteinte.

2. Dispositif pour la mise en oeuvre du procédé suivant la revendication 1, constitué de récipients (1, 4, 11) pour les composants, depuis lesquels des conduites d'amenée (2, 5) mènent par l'intermédiaire de pompes doseuses (6, 16) à une tête mélangeuse (3) comprenant une chambre de mélange présentant une sortie et dans laquelle les composants débouchent par des orifices d'admission, et d'un dispositif (20) de chargement de gaz, dispositif dans lequel est prévu un appareil (41) de mesure de densité qui est relié avec le dispositif de chargement de gaz (20) par l'intermédiaire d'un régulateur (27) agissant sur la charge de gaz, caractérisé en ce que le dispositif de chargement de gaz, (20) est installé dans l'un au moins des récipients (11), lequel présente un agitateur (18) ainsi qu'une admission (2a) et une sortie (2b) pour le composant et une entrée de gaz sous pression (26), est réalisé comme récipient sous pression comportant un dispositif régulateur de pression (27) à l'arrivée (26) du gaz comprimé et d'un système d'admission (2a) et de sortie (2b) des composants pouvant être obturé, et en ce que l'appareil de mesure de densité (41) est disposé dans la partie inférieure du récipient (11) et le dispositif régulateur (27) est réalisé comme appareil de commande (42) qui est en liaison avec le système d'entraînement (19) de l'agitateur (20), ce dernier présentant un arbre creux (21) et des organes creux (24) d'agitation et une ouverture d'aspiration (23) étant prévue dans la partie supérieure de l'arbre creux (21 ) en dessous du couvercle (22) du récipient (11), et les éléments d'agitation (24) présentant des orifices (25) de sortie de gaz.

3. Dispositif suivant la revendication 2, dans lequel le récipient (11) est un récipient intermédiaire qui est prévu entre le réservoir (1) proprement dit et la pompe doseuse (16).

4. Dispositif suivant la revendication 3, dans lequel le récipient intermédiaire (11) peut être contourné au moyen d'un conduit d'évitement (2c).

5. Dispositif suivant l'une des revendications 2 à 4, dans lequel deux récipients (11) sont prévus selon une disposition en tandem à côté d'éléments complémentaires.

FIG. 1